## Europäisches Patentamt
## European Patent Office
## Office européen des brevets

(19)

(11) Publication number: **0 105 645**
**B1**

(12) **EUROPEAN PATENT SPECIFICATION**

(45) Date of publication of patent specification: **16.03.88**

(51) Int. Cl.⁴: **C 09 D 7/14, C 09 D 7/12**

(21) Application number: **83305313.5**

(22) Date of filing: **12.09.83**

(54) **Paint formulations.**

(30) Priority: **14.09.82 GB 8226096**

(43) Date of publication of application:
**18.04.84 Bulletin 84/16**

(45) Publication of the grant of the patent:
**16.03.88 Bulletin 88/11**

(84) Designated Contracting States:
**AT BE CH DE FR GB IT LI LU NL SE**

(56) References cited:
**DE-A-1 519 420**
**DE-A-2 151 189**
**FR-A-1 328 308**
**GB-A- 740 776**
**GB-A-2 077 746**
**US-A-1 173 183**
**US-A-3 131 201**
**US-A-3 396 181**
**US-A-3 447 940**

**"Encyclopedia of Chemical Technology, vol. 16 (1975), p. 745**

**The file contains technical information submitted after the application was filed and not included in this specification**

(73) Proprietor: **REED INTERNATIONAL P.L.C.**
**82, Piccadilly**
**London, W1A 1EJ (GB)**

(72) Inventor: **Foley, Michael James Yates**
**87 Ribchester Road Clayton-le-Dale**
**Blackburn Lancashire (GB)**
Inventor: **Graham, Thomas**
**8 Lancaster Drive**
**Clitheroe Lancashire (GB)**

(74) Representative: **Medlock, Edwin Roy**
**10 Victoria Road Grappenhall**
**Warrington, WA4 2EN (GB)**

Courier Press, Leamington Spa, England.

**0 105 645**

**Description**

This invention relates to container-storable paint formulations.

For a number of years there has been an effort to reduce the use of organic solvents (such as mineral or white spirit) in paints. It is acknowledged that such use involves cost, odour, fire risk, toxicity problems, pollution problems and possible misuse of irreplaceable natural resources. The toxicity problem becomes very acute for example when paint, incorporating hydrocarbon solvents is used for covering large areas, like walls and ceilings, in places of poor ventilation as often occurs in house or office decoration. The pollution problem is also acute in industrially applied finishes.

The above problems have been discussed in our British Patent No. 2,077,746 (corresponding European Patent No. 0,042,684) and one solution, using water dilution, is proposed therein. The present invention provides a further solution basically using air, or gas, as a solvent replacement and provides scope for unpressurised foamed formulations (and thereby avoids aerosol problems) which either contain or do not contain water, the latter being significant where the presence of water could limit the choice of otherwise preferred resins and driers.

The Encyclopedia of Chemical Technology, third edition, vol. 16 (1978) page 745 shows paint formulations for application as surface coverings having a prime content of a spreadable functional medium and including gas phase at atmospheric pressure. It is essential that the gas phase remains in the dried paint film as vesiculated gas bubbles serve as a substitute for titanium dioxide pigment otherwise pigmenting effect is lost.

FR—A—1,328,308 shows the preparation of high solids content dispersions of powdered solid substances such as pigments, flame retardants, plastic powder additives in a liquid phase and foamed to extend them for use, for example, for impregnating textiles or paper, or to be used as adhesives.

The present invention provides a paint formulation for application as surface coverings having a prime content of a spreadable functional medium and including a gas phase at atmospheric pressure characterised in that the formulation is a container storable formulation of non-Newtonian (thixotropic or pseudoplastic) nature having a hydrocarbon solvent content of less than 10% by volume or zero and holding in excess of 5% by volume of the formulation of the gas dispersed therein by mechanical aeration but allowing the gas to shed from the formulation when spread onto a surface to leave a solidifiable coating substantially free of bubbles.

(The figure of 5% is referred to above as many known paints contain a minor, less than 5% gas content that arises normally in the production of the paint).

A combination of gas and water may be used to adjust the "solids" level of the formulation, or to aid the generation of stable gas or air dispersion.

The formulation being of a non-Newtonian nature is capable of restraining the inherent forces of buoyancy of the gas acting to cause separation of the gas from the medium during storage.

It has been found that most paint-familiar hydrocarbon solvents generally tend to act as defoamers and this provides one reason for their preferred avoidance. Where a necessity for some form of solvent arises it is preferred to use a polar solvent, such as glycol ethers which may be present up to 30% by volume. Where the formulation is to be used as a gloss paint the "conventional" level of about 30—70% oleoresinous volume solids can be employed.

Varying the gas content allows the adjustment of volume solids to a convenient level and so reduces or eliminates organic solvents.

The gas content of the formulation is introduced by a simple operation of mechanical aeration and this is most attractive when using ambient air as the gas content. Where ambient air could introduce undesirable oxygen reaction an inert gas such as nitrogen or carbon dioxide could be used. Alternatively additives, such as anti-skinning agents, could be included to suppress oxidation.

To aid drying, where the spread formulation is to be air dried, drying agents such as the so-called "coordination driers" like certain aluminium compounds can be included. Such agents should not be required where the formulation is intended for use as a stoved industrial coating. Dry hydrochloric acid gas can be used to aid drying of an alkyd-based paint.

In addition to the cost and other savings that arise from, effectively, substituting solvent with air, a further unexpected cost advantage arises. It has been found that organic solvents can tend to reduce opacity and this has to be made good with expensive opacifiers. The avoidance or reduction of organic solvents can correspondingly effect a saving in opacifiers.

The gas inclusion also introduces an unexpected advantage with many decorative formulations in that it allows the use of higher molecular weight alkyd resins. Thus, gas-containing paints can be produced having a brushing character comparable with conventional organic-solvent-thinned paints of, say, 0.5 Pas even though the viscosity is greater than this (e.g. 0.8 Pas at 10,000 sec$^{-1}$ at 25°C). The use of higher molecular weight resins can improve drying times and other properties.

Formulations according to the invention will now be given.

Formulation No. 1
White gloss paint

| | |
|---|---|
| TiO$_2$ | 350 gms |
| Vehicle "A" (see below) | 250 gms |
| Vehicle "B" (see below) | 250 gms |
| Calcium as octoate (10%) | 5.0 gms |
| Cobalt as octoate (8%) | 9.4 gms |
| Lead as octoate (36%) | 34.7 gms |

The formulation was mechanically aerated and had the following constituents:

Volume solids

| | |
|---|---|
| TiO$_2$ and vehicles "A" and "B" above | 67% |
| Air | 25% |
| Organic solvent | 8% |

The viscosity after aeration was 1.3 Pas at 10,000 sec$^{-1}$ at 25°C. Vehicle "A" is 100% N.V. (non-volatile) soya bean oil—viscosity 0.7 Pas at 20°C. Vehicle "B" is 100% N.V. thixotropic modified soya bean oil.

Formulation No. 2
Moisture-curing polyurethane wood primer

| | |
|---|---|
| *Desmodur E21 100% N.V. | 50 parts by weight |
| *Desmodur KL5-2550 100% N.V. | 50 parts by weight |
| TiO$_2$ (dry) | 70 parts by weight |

The formulation was mechanically aerated to give a solids content of 60% by volume and a dry air content of 40%.
    *Moisture-cured polyurethane resins ex Bayer of Germany and Registered Trade Marks.

Formulation No. 3

| | |
|---|---|
| Titanium dioxide | 70 parts by weight |
| *Alkyd resin (92% (N.V.) | 109 parts by weight |
| Calcium octoate (10% N.V.) | 1 part by weight |
| Cobalt Octoate (8% N.V.) | 1 part by weight |
| Lead octoate (36% N.V.) | 2 parts by weight |
| Water | 10 parts by weight |
| White spirit | 2 parts by weight |
| Sodium sulphosuccinate | 1 part by weight |

Viscosity at 10,000 sec$^{-1}$ at 25°C=0.9 Pas. The above paint was aerated by a mechanical aerator and the resultant product contained 38% air by volume.
    *Alkyd resin based on soya bean oil (69%) phthalic anhydride and pentaerythritol with 8% solvent, mono ethyl ether of ethylene glycol.

Formulation No. 4

| | |
|---|---|
| Titanium dioxide | 57 parts by weight |
| Alkyd resin 1 (97% N.V.) | 44 parts by weight |
| Alkyd resin 11 (98% N.V.) | 70 parts by weight |
| Aluminium co-ordination drier | 23 parts by weight |
| Cobalt octoate | 1 part by weight |

Viscosity of above paint at 10,000 sec$^{-1}$ and 21°C was 0.8 Pa · s.
    The above paint was mechanically aerated to give a product which contained approximately 35% air by volume.
    Alkyd Resin 1 based on Tall Oil Fatty Acid/Trimellitic Anhydride/Trimethylol Propane.
    Alkyd Resin 11 is a thixotropic modification of Alkyd 1.
    The paint contained 8.5% organic volatile by weight including White (Mineral) Spirit from the alkyd resin and organic volatiles combined with the co-ordination drier.

**Claims**

1. A paint formulation for application as surface coverings having a prime content of a spreadable functional medium and including a gas phase at atmospheric pressure characterised in that the formulation is a container storable formulation of non-Newtonian (thixotropic or pseudoplastic) nature having a hydrocarbon solvent content of less than 10% by volume or zero and holding in excess of 5% by volume of the formulation of the gas dispersed therein by mechanical aeration but allowing the gas to shed from the formulation when spread onto a surface to leave a solidifiable coating substantially free of bubbles.

2. The formulation as claimed in Claim 1, characterised in that it has a polar solvent content of less than 30% by volume.

3. The formulation as claimed in Claim 1, characterised in that the gas is ambient air.

4. The formulation as claimed in any preceding claim, characterised in that it includes a gas which reacts with and contributes to the drying of the solidifiable coating.

5. The formation as claimed in any preceding claim, characterised in that it is suitable for brush application and has a viscosity of 10,000 sec$^{-1}$ of greater than 0.8 Pas at 25°C.

**Patentansprüche**

1. Anstrichmittel für Oberflächenbeschichtungen mit einem überwiegenden Anteil eines ausbreitbaren funktionellen Mediums und einem Gehalt an einer Gasphase bei Atmosphärendruck, dadurch gekennzeichnet, daß das Mittel in Form einer in einem Behälter aufbewahrbaren Zubereitung mit nicht-Newton'schem (thixotropem oder pseudoplastischem) Verhalten mit einem Kohlenwasserstofflösungsmittelgehalt von weniger als 10 Vol.-% oder Null und einem Gehalt von mehr als 5 Vol.-%, bezogen auf die Zubereitung eines durch mechanische Belüftung dispergierten Gases, welches Gas beim Verteilen der Zubreitung auf einer Oberfläche austritt und einen verfestigbaren im wesentlichen blasenfreien Überzug ergibt.

2. Mittel nach Anspruch 1, dadurch gekennzeichnet, daß es einen Gehalt an polaren Lösungsmitteln von weniger als 30 Vol.-% aufweist.

3. Mittel nach Anspruch 1, dadurch gekennzeichnet, daß es als Gas Umgebungsluft enthält.

4. Mittel nach einem der vorhergehenden Ansprüche, dadurch gekennzeichnet, daß es ein Gas enthält, welches reagiert und zu dem Trocknen des verfestigbaren Überzugs beiträgt.

5. Mittel nach einem der vorhergehenden Ansprüche, dadurch gekennzeichnet, daß es mit einem Pinsel aufgetragen werden kann und eine Viskosität bei 10 000 sec$^{-1}$ und 25°C von mehr als 0.8 Pas aufweist.

**Revendications**

1. Composition de peinture pour application comme recouvrement de surface, ayant une teneur principale en un milieu fonctionnel pouvant être étalé et comprenant une phase gazeuse à la pression atmosphérique, caractérisée par le fait que la composition est une composition stockable dans un récipient de nature non-newtonienne (thixotropique ou pseudoplastique), ayant une teneur en solvant hydrocarboné inférieure à 10% en volume ou nulle et maintenant en excès de 5% en volume de la composition le gaz qui y est dispersé par aération mécanique mais laissant le gaz s'échapper de la composition quand elle est étalée sur une surface, pour laisser un revêtement solidifiable sensiblement dépourvu de bulles.

2. Composition selon la revendication 1, caractérisée par le fait qu'elle a une teneur en solvant polaire inférieure à 30% en volume.

3. Composition selon la revendication 1, caractérisée par le fait que la gaz est l'air ambiant.

4. Composition selon l'une des revendications précédentes, caractérisée par le fait qu'elle contient un gaz qui réagir avec le, et contribue au séchage du, revêtement solidifiable.

5. Composition selon l'une des revendications précédentes, caractérisée par le fait qu'elle convient à l'application à la brosse et possède une viscosité, à 10000 s$^{-1}$, supérieure à 0,8 Pas à 25°C.